# EUROPEAN PATENT SPECIFICATION

(11) **EP 2 606 587 B1**
(45) Date of publication and mention of the grant of the patent: **19.06.2019**
(21) Application number: 11818439.9
(22) Date of filing: 19.08.2011
(51) Int. Cl.: H04J 11/00, H04L 1/00, H04L 5/00

(54) **METHODS AND APPARATUS FOR ACTIVATING AND DEACTIVATING SECONDARY CELLS IN A CARRIER AGGREGATION ENVIRONMENT**
VERFAHREN UND VORRICHTUNG ZUR AKTIVIERUNG UND DEAKTIVIERUNG SEKUNDÄRER ZELLEN IN EINER TRÄGERAGGREGATIONSUMGEBUNG
PROCÉDÉS ET APPAREIL POUR ACTIVER ET DÉSACTIVER DES CELLULES SECONDAIRES DANS UN ENVIRONNEMENT D'AGRÉGATION DE PORTEUSES

(30) Priority: 19.08.2010 IN 2399CH2010
(43) Date of publication of application: 26.06.2013
(73) Proprietor: Samsung Electronics Co., Ltd., Gyeonggi-do 443-742 (KR)
(72) Inventor: BAGHEL, Sudhir Kumar, Byrasandra, Bangalore 560093 (IN); MANEPALLI, Venkateswara Rao, Byrasandra, Bangalore 560093 (IN)
(74) Representative: Nederlandsch Octrooibureau
(86) International application number: PCT/KR2011/006159
(87) International publication number: WO 2012/023839

(56) References cited:
- EP-A2- 2 637 332
- CN-A- 1 642 333
- CN-A- 101 453 373
- KR-A- 20050 074 164
- US-A1- 2010 034 176
- US-A1- 2010 130 219

## Description

### Technical Field

The present invention relates to the field of carrier aggregation in wireless communication system, and more particularly relates to methods and apparatus for activating and deactivating secondary cells in a carrier aggregation environment.

### Background Art

Wireless communication systems are widely deployed to provide various communication services such as voice, video, packet data, broadcast, messaging, and so on. These systems may be multiple-access systems capable of supporting communication for multiple users by sharing the available system resources.

Recently, in wireless communication technologies such as long term evolution (LTE)/LTE Advanced (LTE-A), carrier aggregation has been introduced such that two or more component carriers are aggregated in order to support wider transmission bandwidths up to 100MHz. Carrier aggregation technique enables to configure a user equipment (UE) to aggregate different number of cells comprising component carriers and of possibly different bandwidths in both uplink and downlink.

Typically, in a carrier aggregation environment, a UE can have more than one cell with one being primary cell (Pcell) and one or more secondary cell (Scell) for data communication. Both Pcell and Scell may have a downlink component carrier and an uplink component carrier. At any given time, the LTE network can add or remove one or more Scells to the UE based on data requirements. Similarly, the LTE network can activate one or more configured Scells from a deactivated state and vice versa based on data requirements. For example, a configured Scell configured for the UE is deactivated from the activated state due to non-use of the configured Scell for data communication as the unused Scell may consume significant amount of battery power of the UE. The deactivated Scell may not be involved in any active data communication.

Typically, an e-nodeB communicates activation/deactivation of one or more Scells configured for use by the UE using a medium access control (MAC) control element (CE) command. Thus, the UE activates/deactivates the one or more Scells upon receiving the MAC CE command from the eNB. When the MAC CE command is received by the UE, the UE sends positive/negative acknowledgment (ACK/NACK). Usually, a physical uplink control channel (PUCCH) is used for transmission of ACK/ NACK. However, when an uplink grant is available ACK/NACK is sent over physical uplink shared channel (PUSCH). It is well known that, the PUSCH provide good transmission reliability compared to the PUCCH.

US 2010/130219 A1 discloses a method and apparatus for utilizing a plurality of uplink carriers and downlink carriers, wherein a wireless transmit/receive unit (WTRU) activates a primary uplink carrier and a primary downlink carrier and activates or deactivates a secondary uplink carrier based on a signal from a network or upon detection of a pre-configured condition.

US 2010/034176 A1 discloses a method and apparatus for dynamically activating and deactivating a supplementary cell in Dual-Cell HSDPA service of a Universal Mobile Communication Service (UMTS) system, wherein a user equipment receives a supplementary cell activation command from a base station; and transmits a supplementary cell activation or deactivation reply upon comparing an uplink transmission power with a predetermined threshold value.

### Disclosure of Invention

### Technical Problem

If the eNB does not receive the ACK/NACK due to reliability issues, the eNB may consider that the UE has not received the MAC CE command. However, if the UE does receive the MAC CE command, state of one or more Scells may remain unsynchronized between the UE and the eNB. For example, consider that the eNB transmits a MAC CE command for activating a Scell and the UE does receive the MAC CE command, but the corresponding ACK/NACK is not received by eNB. In such case, the eNB may assume that the Scell is not activated at the UE while the UE hasactivated the Scell due to failure to receive the ACK/NACK by eNB . This may result in significant loss of power at UE. Similarly, if the MAC CE command is for deactivation of Scell, the eNB may assume that the Scell is not deactivated at the UE while the UE has deactivated the Scell, thereby causing unwanted wastage of network resources and scheduling errors. Currently, the eNB is not sure whether the UE has successfully received the MAC CE command for activating/deactivating one or more Scells.

Further, upon activation of the Scell(s) at the UE, the eNB schedules data transmission over the activated Scell based on a set of parameters such as channel quality information (CQI), SRS, power head room (PHR), etc. associated with the activated Scell. However, the set of parameters used for scheduling data transmission may not be up-to-date and usage of outdated set of parameters may affect performance of the eNB and wastage of network resources.

### Solution to Problem

The present invention provides methods and apparatus for activating and deactivating secondary cells in a carrier aggregation environment.

### Advantageous Effects of Invention

The present invention provides methods and apparatus for activating and deactivating secondary cells in a carrier aggregation environment. In one embodiment, a medium access control (MAC) control element (CE) command is received from a base station for activating/deactivating a secondary cell associated with user equipment (UE). Then, the secondary cell configured for user equipment is activated/deactivated based on the MAC CE command. Further, a first uplink grant is received from the base station upon activation/deactivation of the secondary cell. Accordingly, quality information (e.g., channel quality information and sounding reference signal information) associated with the cell(s) is transmitted to the base station in the received first uplink grant over a physical uplink shared channel. Furthermore, a hybrid automatic repeat request entity associated with the secondary cell is reset.

### Brief Description of Drawings

Figure 1 illustrates a block diagram of an exemplary carrier aggregation system capable of handling activation/deactivation of secondary cells configured for user equipments (UEs), according to one embodiment.
Figure 2 is a flow diagram illustrating an exemplarymethod of activating/deactivating a secondary cell(s) configured for the UE in a carrier aggregation environment, according to one embodiment.
Figure 3 is a flow diagram illustrating an exemplary method of activating/deactivating a secondary cell(s) configured for the UE in the carrier aggregation environment, according to another embodiment.
Figure 4 shows an example of the UE for implementing one or more embodiments of the present subject matter.

### Best Mode for Carrying out the Invention

The present invention provides methods and apparatus for activating and deactivating secondary cells in a carrier aggregation environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

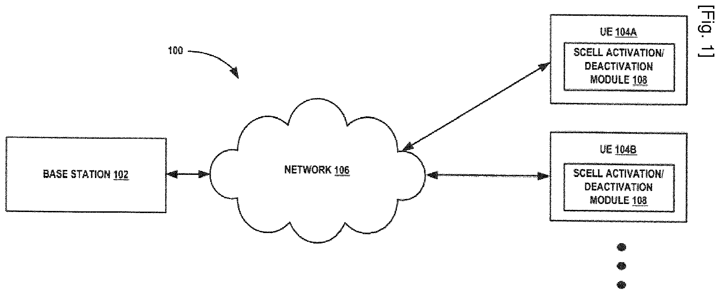

Figure 1 illustrates a block diagram of an exemplary carrier aggregation system 100 capable of handling activation/deactivation of secondary cells configured for user equipments (UEs) 104A-N, according to one embodiment. In Figure 1, the carrier aggregation system100 includes a base station 102, UEs 104A-N and a network 106. The UEs 104A-N may be mobile stations, laptops, cell phones, tablets and the like. Each of the UEs 104A-N includes a Scell activation/deactivation module 108. The base station 102 and the UEs 104A-N are connected wirelessly via the network 106.

Consider that, the base station 102 has configured a primary cell and a secondary cell for the UE 104A. Also, consider that the primary cell is in activated state and the secondary cell is the deactivated state. Based on the data transmission requirements, the base station 102 wishes to activate the secondary cell associated with the UE 104A from the deactivated state. In an exemplary operation, the base station 102 sends a medium access control (MAC) control element (CE) command for activating the secondary cell. The Scell activation/deactivation module 108 activates the secondary cell based on the MAC CE command.

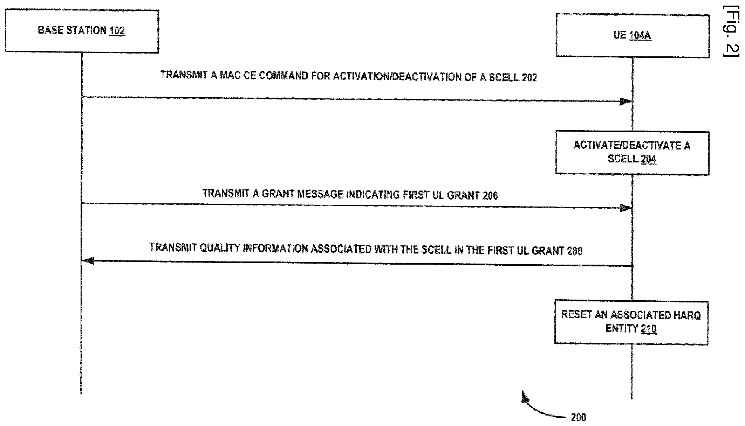

Upon activation of the secondary cell, quality information (e.g., channel quality information, and sounding reference signal information) associated with the cell(s) is triggered by the Scell activation/deactivation module 108. Accordingly, the Scell activation/deactivation module 108 transmits the quality information to the base station 102 at a first uplink grant available upon activation of the secondary cell over a physical uplink shared channel. The quality information received at the base station 102 indicates that the secondary cell is activated at the UE 104A. Also, the quality information received upon activation of the secondary cell enables the base station 102 to schedule data transmission based on up-to-date quality information. One can envision that, the above described process is applicable for deactivation of the secondary cell from the activated state. Below description of Figures 2 through 3 provides various method steps associated with activation/deactivation of one or more secondary cells associated with the UE 104A in greater detail.

Figure 2 is a flow diagram 200 illustrating an exemplary method of activating/deactivating a secondary cell(s) configured for the UE 104A in a carrier aggregation environment, according to one embodiment. At step 202, the base station 102 transmits a MAC CE command for activation/deactivation of a secondary cell(s) configured for use by the UE 104A. At step 204, the UE 104A activates/deactivates the secondary cell(s) associated the UE 104A based on the MAC CE command. At step 206, the base station 102 transmits a grant message indicating a first uplink grant allocated to the user equipment 104A.

At step 208, the UE 104A transmits quality information associated with the cell(s) in the first uplink grant over a physical uplink shared channel (PUSCH). The quality information may include channel quality information (CQI) and/or sounding reference signal (SRS) information for the cell(s). In one embodiment, the quality information associated with the cell(s) is triggered when the secondary cell(s) are activated and/ ordeactivated. For example, when the UE 104A activates/deactivates the secondary cell(s) as per the MAC CE command, aperiodic CQI and/or aperiodic/periodic SRS information is triggered at the UE 104A.

In another embodiment, the base station 102 may send a quality information trigger substantially simultaneously with the MAC CE command in a transport block over PUSCH. In this embodiment, the quality information is triggered based on the quality information trigger received in the transport block. For example, when the quality information trigger is aperiodic CQI trigger, the UE 104A transmits CQI associated with the cell(s). Alternatively, the UE 104A transmits SRS information associated with uplink quality of the cell(s) when the quality information trigger is aperiodic SRS trigger. Thus, the quality information transmitted in the first uplink grant helps the base station 102 to accurately schedule data transmission. Also,the quality information received at the base station 102 indicates that the UE 104A has received the MAC CE command and activated/deactivated the secondary cell(s) based on the MAC CE command. In other words, if the quality information is not received in the first uplink grant, the base station 102 understands that the UE 104A has not received the MC CE command and hence re-transmits the MAC CE command.

At step 210, the UE 104A resets a hybrid automatic repeat request (HARQ) entity associated with the secondary cell(s). In one embodiment, the UE 104A flushes HARQ buffers associated with one or more HARQ processes upon activation/deactivation of the secondary cell(s) in uplink and/or downlink. In another embodiment, when the corresponding secondary cell(s) is deactivated in uplink, the UE 104A flushes HARQ buffers associated with the HARQ processes and sets new data indicators (NDIs) associated with the HARQ processes to a value '0'. Additionally, the UE 104A reinitializes state variables of the HARQ processes. Also, for each of the downlink HARQ processes, the UE 104A considers a next received data transmission as a first data transmission.

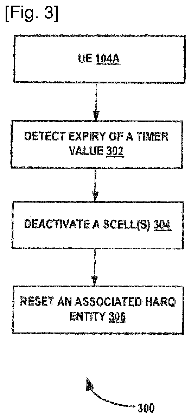

Figure 3 is a flow diagram 300 illustrating an exemplary method of deactivating a secondary cell(s) configured for the UE 104A in a carrier aggregation environment, according to another embodiment. At step 302, the UE 104A detects expiry of a timer value associated with a timing advance timer. At step 304, the UE 104A deactivates the secondary cell(s) associated the UE 104A when the timer value is expired.

At step 306, the UE 104A resets a HARQ entity associated with the secondary cell(s). When the corresponding secondary cell(s) is deactivated in uplink, the UE 104A flushes HARQ buffers associated with the HARQ processes and sets new data indicators (NDIs) associated with the HARQ processes to a value '0'. Additionally, the UE 104A reinitializes state variables of the HARQ processes.

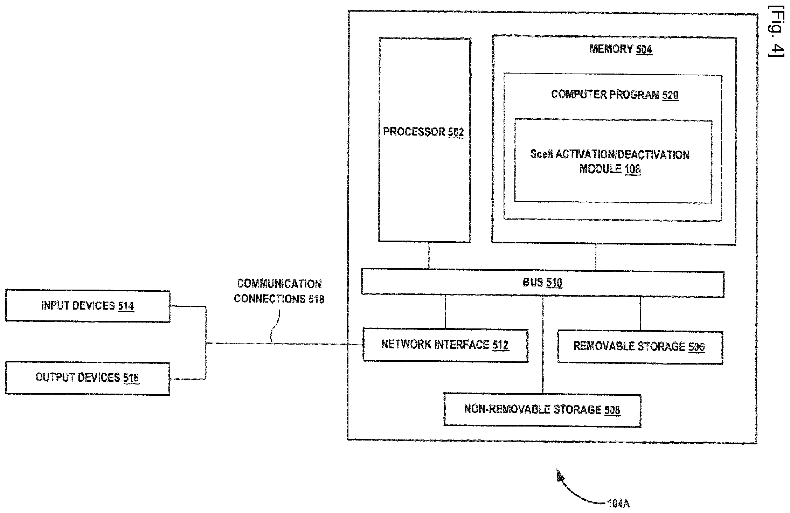

Figure 4 shows an example of the UE 104A for implementing one or more embodiments of the present subject matter. Figure 4 and the following discussion are intended to provide a brief, general description of the suitable UE 104A in which certain embodiments of the inventive concepts contained herein may be implemented.

The UE 104A may include a processor 502, memory 504, a removable storage 506, and a non-removable storage 508. The UE 104A additionally includes a bus 510 and a network interface 512. The UE 104A may include or have access to one or more user input devices 514, one or more output devices 516, and one or more communication connections 518 such as a network interface card or a universal serial bus connection. The one or more user input devices 514 may be keypad, mouse pad, and the like. The one or more output devices 516 may be a display of the UE 104A. The communication connections 518 may include a wireless communication network such as LTE.

A variety of computer-readable storage media may be stored in and accessed from the memory elements of the UE 104A, the removable storage 506 and the non-removable storage 508. Computer memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, Memory Sticks ™, and the like.

The processor 502, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 502 may also include embedded controllers, such as generic or programmable logic devices or arrays, application specific integrated circuits, single-chip computers, smart cards, and the like.

Embodiments of the present subject matter may be implemented in conjunction with program modules, including functions, procedures, data structures, and application programs, for performing tasks, or defining abstract data types or low-level hardware contexts. Machine-readable instructions stored on any of the above-mentioned storage media may be executable by the processor 502 of the UE 104A. For example, a computer program 520 may include the Scell activation/deactivation module 108 capable of performing activating and deactivating of secondary cells in a carrier aggregation environment and associated procedures, according to the teachings and herein described embodiments of the present subject matter. In one embodiment, the computer program 520 may be included on a compact disk-read only memory (CD-ROM) and loaded from the CD-ROM to a hard drive in the memory 504. The Scell activation/deactivation module 108 may cause the UE 104A to perform various functions according to the various embodiments of the present subject matter.

The present embodiments have been described with reference to specific example embodiments, it will be evident that various modifications and changes may be made to these embodiments without departing from the scope of the various embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure
and methods may be embodied using transistors, logic gates, and electrical circuits, such as application specific integrated circuit.

## Claims

1. A method for activating/deactivating a secondary cell at a user equipment, UE, in a communication system based on carrier aggregation, the method comprising:
activating at least one secondary cell configured for the UE based on a command received from a base station;
determining whether transmission of quality information associated with the at least one secondary cell is triggered upon activating the at least one secondary cell; and
transmitting the quality information to the base station in response to an uplink grant firstly available after activation of the at least one secondary cell if the transmission of the quality information is triggered, wherein transmission of the quality information in response to the uplink grant firstly available after the activation of the at least one secondary cell indicates the activation of the at least one secondary cell; and
resetting a hybrid automatic repeat request, HARQ, entity associated with the at least one secondary cell upon activating the at least one secondary cell.

2. The method of claim 1, wherein the quality information includes a power head room, PHR.

3. The method of claim 1, further comprising:
determining if the at least one secondary cell is deactivated; and
if the at least one secondary cell is deactivated, clearing (210) all HARQ buffers associated with the at least one secondary cell.

4. The method of claim 1, further comprising:
activating/deactivating the at least one secondary cell based on a medium access control, MAC, control element received from the base station.

5. A method for activating/deactivating a secondary cell at a base station in a communication system based on carrier aggregation, the method comprising:
transmitting a command to a user equipment, UE, for activating at least one secondary cell;
transmitting, to the UE, an uplink grant which is firstly available by the UE after activation of the at least one secondary cell;
receiving (208) quality information associated with the at least one secondary cell from the UE in response to the uplink grant firstly available by the UE after activation of the at least one secondary cell; and
determining that the at least one secondary cell is activated based on the received quality information.

6. The method of claim 5, wherein the quality information includes a power head room, PHR.

7. The method of claim 5, further comprising transmitting a quality information trigger to the UE.

8. The method of claim 5, wherein if the at least one secondary cell is deactivated, all hybrid automatic repeat request, HARQ, buffers associated with the at least one secondary cell are cleared by the UE.

9. The method of claim 5, wherein the command for activating the at least one secondary cell is transmitted using a medium access control, MAC, control element.

10. A user equipment, UE, for activating/deactivating a secondary cell in a communication system based on carrier aggregation, the UE comprising:
a controller adapted to activate at least one secondary cell configured for the UE based on a command received from a base station, to determine whether transmission of quality information associated with the at least one secondary cell is triggered upon activating the at least one secondary cell, and to control a transceiver to transmit the quality information to the base station in response to an uplink grant firstly available after activation of the at least one secondary cell if transmission of the quality information is triggered, the controller being further adapted to reset a hybrid automatic repeat request, HARQ, entity associated with the at least one secondary cell upon activating the at least one secondary cell,
wherein transmission of the quality information in response to the uplink grant firstly available after the activation of the at least one secondary cell indicates the activation of the at least one secondary cell.

11. The UE of claim 10, wherein the quality information includes a power head room, PHR.

12. The UE of claim 10, wherein the controller determines if the at least one secondary cell is deactivated and, if the at least one secondary cell is deactivated, the controller clears all HARQ buffers associated with the at least one secondary cell.

13. The UE of claim 10, wherein the controller activates/deactivates the at least one secondary cell based on a medium access control, MAC, control element received from the base station.

14. A base station for activating/deactivating a secondary cell in a communication system based on carrier aggregation, the base station comprising:
a controller adapted to control a transceiver to transmit a command to a user equipment, UE, for activating at least one secondary cell, to transmit, to the UE, an uplink grant which is firstly available by the UE after activation of the at least one secondary cell, to receive quality information associated with the at least one secondary cell from the UE in response to the uplink grant firstly available by the UE after activation of the at least one secondary cell, the controller being further adapted to determine that the at least one secondary cell is activated based on the received quality information.

15. The base station of claim 14, wherein the quality information includes a power head room, PHR.

16. The base station of claim 14, wherein the controller is further for controlling the transceiver to transmit a quality information trigger to the UE.

17. The base station of claim 14, wherein, if the at least one secondary cell is deactivated, all Hybrid Automatic Repeat reQuest, HARQ, buffers associated with the at least one secondary cell are cleared by the UE.

18. The base station of claim 5, wherein the command for activating the at least one secondary cell is transmitted using a medium access control, MAC, control element.

## Patentansprüche

1. Verfahren zum Aktivieren/Deaktivieren einer sekundären Zelle an einem Benutzergerät, UE, in einem Kommunikationssystem basierend auf einer Trägeraggregation, wobei das Verfahren umfasst:
Aktivieren mindestens einer sekundären Zelle, die für das UE basierend auf einem von einer Basisstation empfangenen Befehl konfiguriert ist;
Bestimmen, ob die Übertragung von Qualitätsinformationen, die der mindestens einen sekundären Zelle zugeordnet sind, beim Aktivieren der mindestens einen sekundären Zelle ausgelöst wird; und
Übertragen der Qualitätsinformationen an die Basisstation als Reaktion auf eine Uplink-Unterstützung, die zuerst nach der Aktivierung der mindestens einen sekundären Zelle verfügbar ist, wenn die Übertragung der Qualitätsinformationen ausgelöst wird, wobei die Übertragung der Qualitätsinformationen als Reaktion auf die Uplink-Unterstützung, die zuerst nach der Aktivierung der mindestens einen sekundären Zelle verfügbar ist, die Aktivierung der mindestens einen sekundären Zelle angibt; und
Zurücksetzen einer Hybride-Automatische-Wiederholungsanforderung, HARQ,-Entität, die der mindestens einen sekundären Zelle zugeordnet ist, bei Aktivierung der mindestens einen sekundären Zelle.

2. Verfahren nach Anspruch 1, wobei die Qualitätsinformationen einen Leistungsraum, PHR, enthalten.

3. Verfahren nach Anspruch 1, ferner umfassend:
Bestimmen, ob die mindestens eine sekundäre Zelle deaktiviert ist; und
wenn die mindestens eine sekundäre Zelle deaktiviert ist, Löschen (210) aller HARQ-Puffer, die der mindestens einen sekundären Zelle zugeordnet sind.

4. Verfahren nach Anspruch 1, ferner umfassend:
Aktivieren/Deaktivieren der mindestens einen sekundären Zelle basierend auf einem von der Basisstation empfangenen Medienzugriffssteuerung, MAC, -Steuerelement.

5. Verfahren zum Aktivieren/Deaktivieren einer sekundären Zelle an einer Basisstation in einem Kommunikationssystem basierend auf einer Trägeraggregation, wobei das Verfahren umfasst:
Übertragen eines Befehls an ein Benutzergerät, UE, zum Aktivieren mindestens einer sekundären Zelle;
Übertragen einer Uplink-Unterstützung an das UE, welche zuerst vom UE nach der Aktivierung der mindestens einen sekundären Zelle verfügbar ist;
Empfangen (208) von Qualitätsinformationen, die der mindestens einen sekundären Zelle zugeordnet sind, von dem UE als Reaktion auf die Uplink-Unterstützung, die zuerst vom UE nach Aktivierung der mindestens einen sekundären Zelle verfügbar ist; und
Bestimmen, dass die mindestens eine sekundäre Zelle aktiviert ist, basierend auf den empfangenen Qualitätsinformationen.

6. Verfahren nach Anspruch 5, wobei die Qualitätsinformationen einen Leistungsraum, PHR, enthalten.

7. Verfahren nach Anspruch 5, ferner umfassend das Übertragen eines Qualitätsinformationsauslösers an das UE.

8. Verfahren nach Anspruch 5, wobei, wenn die mindestens eine sekundäre Zelle deaktiviert ist, alle Hybride-Automatische-Wiederholungsanforderung, HARQ,-Puffer, die der mindestens einen sekundären Zelle zugeordnet sind, von dem UE gelöscht werden.

9. Verfahren nach Anspruch 5, wobei der Befehl zum Aktivieren der mindestens einen sekundären Zelle unter Verwendung eines Medienzugriffssteuerung, MAC,-Steuerelements übertragen wird.

10. Benutzergerät, UE, zum Aktivieren/Deaktivieren einer sekundären Zelle in einem Kommunikationssystem basierend auf einer Trägeraggregation, wobei das UE Folgendes umfasst:
eine Steuerung, die ausgelegt ist, um mindestens eine sekundäre Zelle zu aktivieren, die für das UE basierend auf einem von einer Basisstation empfangenen Befehl konfiguriert ist, um zu bestimmen, ob die Übertragung von Qualitätsinformationen, die der mindestens einen sekundären Zelle zugeordnet sind, beim Aktivieren der mindestens einen sekundären Zelle ausgelöst wird, und um einen Sendeempfänger zu steuern, die Qualitätsinformationen an die Basisstation als Reaktion auf eine Uplink-Unterstützung, die zuerst nach Aktivierung der mindestens einen sekundären Zelle verfügbar ist, zu übertragen, wenn die Übertragung der Qualitätsinformationen ausgelöst wird, wobei die Steuerung ferner ausgelegt ist, um eine Hybride-Automatische-Wiederholungsanforderung, HARQ,-Entität, die der mindestens einen sekundären Zelle zugeordnet ist, beim Aktivieren der mindestens einen sekundären Zelle zurückzusetzen,
wobei die Übertragung der Qualitätsinformationen als Reaktion auf die Uplink-Unterstützung, die zuerst nach der Aktivierung der mindestens einen sekundären Zelle verfügbar ist, die Aktivierung der mindestens einen sekundären Zelle angibt.

11. UE nach Anspruch 10, wobei die Qualitätsinformationen einen Leistungsraum, PHR, enthalten.

12. UE nach Anspruch 10, wobei die Steuerung bestimmt, ob die mindestens eine sekundäre Zelle deaktiviert ist, und, falls die mindestens eine sekundäre Zelle deaktiviert ist, die Steuerung alle HARQ-Puffer, die der mindestens einen sekundären Zelle zugeordnet sind, löscht.

13. UE nach Anspruch 10, wobei die Steuerung die mindestens eine sekundäre Zelle basierend auf einem von der Basisstation empfangenen Medienzugriffssteuerung, MAC, -Steuerelement aktiviert/deaktiviert.

14. Basisstation zum Aktivieren/Deaktivieren einer sekundären Zelle in einem Kommunikationssystem basierend auf einer Trägeraggregation, wobei die Basisstation Folgendes umfasst:
eine Steuerung, die ausgelegt ist, um einen Sendeempfänger zu steuern, einen Befehl an ein Benutzergerät, UE, zum Aktivieren mindestens einer sekundären Zelle zu übertragen, um eine Uplink-Unterstützung an das UE zu übertragen, welche zuerst vom UE nach Aktivierung der mindestens einen sekundären Zelle verfügbar ist, um Qualitätsinformationen, die der mindestens einen sekundären Zelle zugeordnet sind, von dem UE als Reaktion auf die Uplink-Unterstützung zu empfangen, die zuerst vom UE nach Aktivierung der mindestens einen sekundären Zelle verfügbar ist,
wobei die Steuerung ferner ausgelegt ist, um zu bestimmen, dass die mindestens eine sekundäre Zelle basierend auf den empfangenen Qualitätsinformationen aktiviert wird.

15. Basisstation nach Anspruch 14, wobei die Qualitätsinformationen einen Leistungsraum, PHR, umfassen.

16. Basisstation nach Anspruch 14, wobei die Steuerung ferner zum Steuern des Sendeempfängers dient, um einen Qualitätsinformationsauslöser an das UE zu übertragen.

17. Basisstation nach Anspruch 14, wobei, wenn die mindestens eine sekundäre Zelle deaktiviert ist, alle Hybride-Automatische-Wiederholungsanforderung, HARQ,-Puffer, die der mindestens einen sekundären Zelle zugeordnet sind, von dem UE gelöscht werden.

18. Basisstation nach Anspruch 5, wobei der Befehl zum Aktivieren der mindestens einen sekundären Zelle unter Verwendung eines Medienzugriffssteuerung, MAC,-Steuerelements übertragen wird.

## Revendications

1. Procédé d'activation/désactivation d'une cellule secondaire à un équipement d'utilisateur, UE, dans un système de communication basé sur une agrégation de porteuses, le procédé comprenant :
l'activation d'au moins une cellule secondaire configurée pour l'UE sur la base d'une commande reçue en provenance d'une station de base ;
la détermination si une transmission d'informations de qualité associées à l'au moins une cellule secondaire est déclenchée à l'activation de l'au moins une cellule secondaire ; et
la transmission des informations de qualité à destination de la station de base en réponse à un octroi de liaison montante disponible tout d'abord après une activation de l'au moins une cellule secondaire si la transmission des informations de qualité est déclenchée, dans lequel une transmission des informations de qualité en réponse à l'octroi de liaison montante disponible tout d'abord après l'activation de l'au moins une cellule secondaire indique l'activation de l'au moins une cellule secondaire ; et
la réinitialisation d'une entité de demande de répétition automatique hybride, HARQ, associée à l'au moins une cellule secondaire à l'activation de l'au moins une cellule secondaire.

2. Procédé selon la revendication 1, dans lequel les informations de qualité incluent une marge de puissance, PHR.

3. Procédé selon la revendication 1, comprenant en outre :
la détermination si l'au moins une cellule secondaire est désactivée ; et
si l'au moins une cellule secondaire est désactivée, l'effacement (210) de toutes les mémoires tampon HARQ associées à l'au moins une cellule secondaire.

4. Procédé selon la revendication 1, comprenant en outre :
l'activation/désactivation de l'au moins une cellule secondaire sur la base d'un élément de commande de commande d'accès au support, MAC, reçu en provenance de la station de base.

5. Procédé d'activation/désactivation d'une cellule secondaire à une station de base dans un système de communication basé sur une agrégation de porteuses, le procédé comprenant :
la transmission d'une commande à destination d'un équipement d'utilisateur, UE, pour l'activation d'au moins une cellule secondaire ;
la transmission, à destination de l'UE, d'un octroi de liaison montante qui est disponible tout d'abord par l'UE après l'activation de l'au moins une cellule secondaire ;
la réception (208) d'informations de qualité associées à l'au moins une cellule secondaire en provenance de l'UE en réponse à l'octroi de liaison montante disponible tout d'abord par l'UE après l'activation de l'au moins une cellule secondaire ; et
la détermination que l'au moins une cellule secondaire est activée sur la base des informations de qualité reçues.

6. Procédé selon la revendication 5, dans lequel les informations de qualité incluent une marge de puissance, PHR.

7. Procédé selon la revendication 5, comprenant en outre la transmission d'un déclenchement d'informations de qualité à destination de l'UE.

8. Procédé selon la revendication 5, dans lequel, si l'au moins une cellule secondaire est désactivée, toutes les mémoires tampon de demande de répétition automatique hybride, HARQ, associées à l'au moins une cellule secondaire sont effacées par l'UE.

9. Procédé selon la revendication 5, dans lequel la commande pour l'activation de l'au moins une cellule secondaire est transmise en utilisant un élément de commande de commande d'accès au support, MAC.

10. Equipement d'utilisateur, UE, permettant l'activation/désactivation d'une cellule secondaire dans un système de communication basé sur une agrégation de porteuses, l'UE comprenant :
un organe de commande apte à effectuer l'activation d'au moins une cellule secondaire configurée pour l'UE sur la base d'une commande reçue en provenance d'une station de base, la détermination si une transmission d'informations de qualité associées à l'au moins une cellule secondaire est déclenchée à l'activation de l'au moins une cellule secondaire, et la commande à un émetteur-récepteur d'exécuter la transmission des informations de qualité à destination de la station de base en réponse à un octroi de liaison montante disponible tout d'abord après une activation de l'au moins une cellule secondaire si la transmission des informations de qualité est déclenchée, l'organe de commande étant en outre apte à effectuer la réinitialisation d'une entité de demande de répétition automatique hybride, HARQ, associée à l'au moins une cellule secondaire à l'activation de l'au moins une cellule secondaire,
dans lequel une transmission des informations de qualité en réponse à l'octroi de liaison montante disponible tout d'abord après l'activation de l'au moins une cellule secondaire indique l'activation de l'au moins une cellule secondaire.

11. UE selon la revendication 10, dans lequel les informations de qualité incluent une marge de puissance, PHR.

12. UE selon la revendication 10, dans lequel l'organe de commande effectue la détermination si l'au moins une cellule secondaire est désactivée, et, si l'au moins une cellule secondaire est désactivée, l'organe de commande effectue l'effacement de toutes les mémoires tampon HARQ associées à l'au moins une cellule secondaire.

13. UE selon la revendication 10, dans lequel l'organe de commande effectue l'activation/désactivation de l'au moins une cellule secondaire sur la base d'un élément de commande de commande d'accès au support, MAC, reçu en provenance de la station de base.

14. Station de base permettant l'activation/désactivation d'une cellule secondaire dans un système de communication basé sur une agrégation de porteuses, la station de base comprenant :
un organe de commande apte à commander à un émetteur-récepteur d'exécuter la transmission d'une commande à destination d'un équipement d'utilisateur, UE, pour l'activation d'au moins une cellule secondaire, la transmission, à destination de l'UE, d'un octroi de liaison montante qui est disponible tout d'abord par l'UE après l'activation de l'au moins une cellule secondaire, la réception d'informations de qualité associées à l'au moins une cellule secondaire en provenance de l'UE en réponse à l'octroi de liaison montante disponible tout d'abord par l'UE après l'activation de l'au moins une cellule secondaire, l'organe de commande étant en outre apte à effectuer la détermination que l'au moins une cellule secondaire est activée sur la base des informations de qualité reçues.

15. Station de base selon la revendication 14, dans laquelle les informations de qualité incluent une marge de puissance, PHR.

16. Station de base selon la revendication 14, dans laquelle l'organe de commande est en outre configuré pour commander à l'émetteur-récepteur d'exécuter la transmission d'un déclenchement d'informations de qualité à destination de l'UE.

17. Station de base selon la revendication 14, dans laquelle, si l'au moins une cellule secondaire est désactivée, toutes les mémoires tampon de demande de répétition automatique hybride, HARQ, associées à l'au moins une cellule secondaire sont effacées par l'UE.

18. Station de base selon la revendication 5, dans laquelle la commande pour l'activation de l'au moins une cellule secondaire est transmise en utilisant un élément de commande de commande d'accès au support, MAC.
